Europäisches Patentamt

European Patent Office

Office européen des brevets

(19)

(11) Veröffentlichungsnummer: **0 064 202**

**A1**

(12) **EUROPÄISCHE PATENTANMELDUNG**

(21) Anmeldenummer: **82103248.9**

(22) Anmeldetag: **17.04.82**

(51) Int. Cl.³: **B 60 S 5/00**
**B 60 Q 9/00, G 07 C 3/00**

(30) Priorität: **06.05.81 DE 3117951**

(43) Veröffentlichungstag der Anmeldung:
**10.11.82 Patentblatt 82/45**

(84) Benannte Vertragsstaaten:
**FR GB IT SE**

(71) Anmelder: **AUDI NSU AUTO UNION
AKTIENGESELLSCHAFT**

**D-7107 Neckarsulm(DE)**

(72) Erfinder: **Pasch, Erich
Peter-Heinrich-Merckle-Strasse
D-7107 Neckarsulm(DE)**

(72) Erfinder: **Elser, Günter
Sauselestrasse 36
D-7110 Öhringen(DE)**

(74) Vertreter: **Speidel, Eberhardt
Waldpromenade 26
D-8035 Gauting(DE)**

(54) Service-Intervall-Anzeigesystem für Kraftfahrzeuge.

(57) Das Service-Intervall für Kraftfahrzeuge mit Antrieb durch eine Brennkraftmaschine wird durch die Kraftstoffmenge (Norm-Verbrauchsmenge) festgelegt, die bei normaler Fahrweise unter durchschnittlichen klimatischen und geologischen Verhältnissen für die Fahrstrecke (Norm-Fahrstrecke) benötigt wird, nach deren Ablauf normalerweise ein Service durchzuführen ist. Bei höherer Belastung ergibt sich ein höherer Kraftstoffverbrauch, so daß die Norm-Verbauchsmenge schon vor dem Zurücklegen der Norm-Fahrstrecke verbraucht ist und der Service früher durchgeführt werden soll als bei geringer Belastung, bei der auch der Verbrauch geringer ist und dadurch die mit der Norm-Verbrauchsmenge zurückgelegte Fahrestrecke länger ist als die Norm-Fahrstrecke.

Fig.1

Croydon Printing Company Ltd.

Service-Intervall-Anzeigesystem für Kraftfahrzeuge

Die Erfindung bezieht sich auf ein Service-Intervall-Anzeigesystem für Kraftfahrzeuge mit Antrieb durch eine Brennkraftmaschine.

Bisher wurde von den Fahrzeugherstellern ein bestimmtes Service-Intervall in Form der zurückgelegten Wegstrecke, beispielsweise 10 000 km, vorgeschrieben, nach dessen Ablauf bestimmte Maßnahmen, beispielsweise Inspektion, Ölwechsel oder dergleichen durchgeführt werden sollen. Da die Beanspruchung des Fahrzeuges je nach Fahrweise, den klimatischen Bedingungen oder geographischen Gegebenheiten sehr unterschiedlich sein kann, kann das vorgeschriebene Service-Intervall zu lang oder zu kurz sein, je nachdem, ob eine hohe Belastung oder eine geringe Belastung der Antriebsmaschine vorliegt. Im ersten Fall können Motorschäden auftreten, während im zweiten Fall Servicearbeiten zu einem Zeitpunkt durchgeführt werden, zu dem sie noch lange nicht nötig wären. Um hier Abhilfe zu schaffen, ist ein Service-Intervall-Anzeigesystem bekannt geworden, bei dem unter Berücksichtigung der Motordrehzahl, der Kühlwassertemperatur, des Öldrucks und der zurückgelegten Wegstrecke, festgestellt durch einen Weg- und Zeitzähler, die tatsächliche Beanspruchung festgestellt wird. Beim Erreichen eines bestimmten Wertes wird der Fahrer durch eine Signal aufgefordert, den betreffenden Service durchführen zu lassen.

Dieses bekannte Service-Intervall-Anzeigesystem arbeitet zwar sehr genau, ist jedoch zumindest bei Kraftfahrzeugen ohne elektronische Benzineinspritzung aufgrund der Vielzahl von elektronischen Bauelementen außerordentlich aufwendig.

Der Erfindung liegt die Aufgabe zugrunde, ein Service-Intervall-Anzeigesystem zu schaffen, das sich mit einem erheblich geringeren Aufwand verwirklichen läßt.

Diese Aufgabe wird erfindungsgemäß dadurch gelöst, daß in Abhängigkeit von einem bestimmten Durchschnittsverbrauch für eine bestimmte Fahrstrecke (entsprechend beispielsweise dem bisher üblichen Service-Intervall) eine Kraftstoffgesamtmenge festgelegt wird, daß die tatsächlich verbrauchte Kraftstoffmenge von Beginn jedes Service-Intervalls an fortlaufend addiert wird und daß bei Erreichen der festgelegten Kraftstoffgesamtmenge ein Signal ausgelöst wird, das dem Benutzer anzeigt, daß der nächste Service fällig ist.

Der Erfindung liegt dabei die Erkenntnis zugrunde, daß der Kraftstoffverbrauch ein recht zuverlässiges Maß für die Beanspruchung der Brennkraftmaschine ist. So ist der Kraftstoffverbrauch im Stadt- und Kurzstreckenbetrieb, bei Kaltstarts oder bei sportlicher Fahrweise oft erheblich höher als bei Langstreckenbetrieb und schonender Fahrweise, und entsprechend ist auch die Beanspruchung der Brennkraftmaschine im ersten Fall erheblich höher als im zweiten Fall.

Der Kraftstoffverbrauch bei normalen Einsatzbedingungen wird für jeden Fahrzeugtyp werksseitig bestimmt und betrage beispielsweise 8 1/100 km. Bei einem üblichen Wartungsintervall von 7500 km Fahrstrecke werden somit 600 Liter Kraftstoff verbraucht. Diese Kraftstoffmenge kann jedoch beim Betrieb des Kraftfahrzeuges unter hoher Belastung bereits nach beispielsweise 6000 km verbraucht sein, während bei schonender Fahrweise und überwiegendem Langstreckenbetrieb mit dieser Kraftstoffmenge beispielsweise 10 000 km zurückgelegt werden können. Dementsprechend ist der nächste Service im einen Fall bereits nach 6000 km und im anderen Fall erst nach 10 000 km fällig.

Die Ermittlung der tatsächlich verbrauchten Kraftstoffmenge kann mittels eines in der Kraftstoffleitung zur Brennkraftmaschine angeordneten Durchflußmengenmessers erfolgen, der beispielsweise für jeweils eine bestimmte, die Leitung durchfließende Kraftstoffmenge einen Impuls abgibt, der in einem

- 3 -                                    0064202

Zählwerk gespeichert wird, das nach Erreichen der festgelegten Kraftstoffverbrauchsmenge entsprechenden Impulszahl das erwähnte Signal auslöst. Ein derartiges Zählwerk kann auch subtraktiv arbeiten, indem von der der festgelegten Kraftstoffverbrauchsmenge entsprechenden Impulszahl die durch die verbrauchte Kraftstoffmenge erzeugten Impulse abgezogen werden, bis die Zahl Null erreicht wird.

Bei Fahrzeugen mit einer Brennkraftmaschine mit Benzineinspritzung, bei der eine Luftmengenmessung vorgenommen und der Kraftstoff entsprechend der durchgesetzten Luftmenge ermittelt und zugemessen wird, ist es auch möglich, die Auslenkung des Luftmeßorgans in ein elektrisches Signal umzuwandeln und daraus in Verbindung mit einem Taktgeber einen Summenwert zu bilden, der der verbrauchten Kraftstoffmenge entspricht und der mit der festgelegten durchschnittlichen Verbrauchsmenge verglichen wird, um zu gegebener Zeit ein Signal auszulösen. Bei Benzineinspritzanlagen mit intermittierender Kraftstoffeinspritzung kann die Öffnungszeit des Einspritzventils erfaßt und daraus mit Hilfe eines Integrators die verbrauchte Kraftstoffmenge ermittelt werden, die wiederum mit der festgelegten durchschnittlichen Verbrauchsmenge verglichen wird.

Bei Diesel-Brennkraftmaschinen kann zur Ermittlung der verbrauchten Kraftstoffmenge die Lage des Stellhebels an der Kraftstoff-Einspritzpumpe in Verbindung mit dem Pumpenkennfeld (Einspritzmenge in Abhängigkeit von der Drehzahl bei unterschiedlichen Stellungen des Stellhebels) ermittelt werden.

Das Funktionsprinzip des erfindungsgemäßen Service-Intervall-Anzeigesystems ist aus der beiliegenden Zeichnung ersichtlich, und zwar

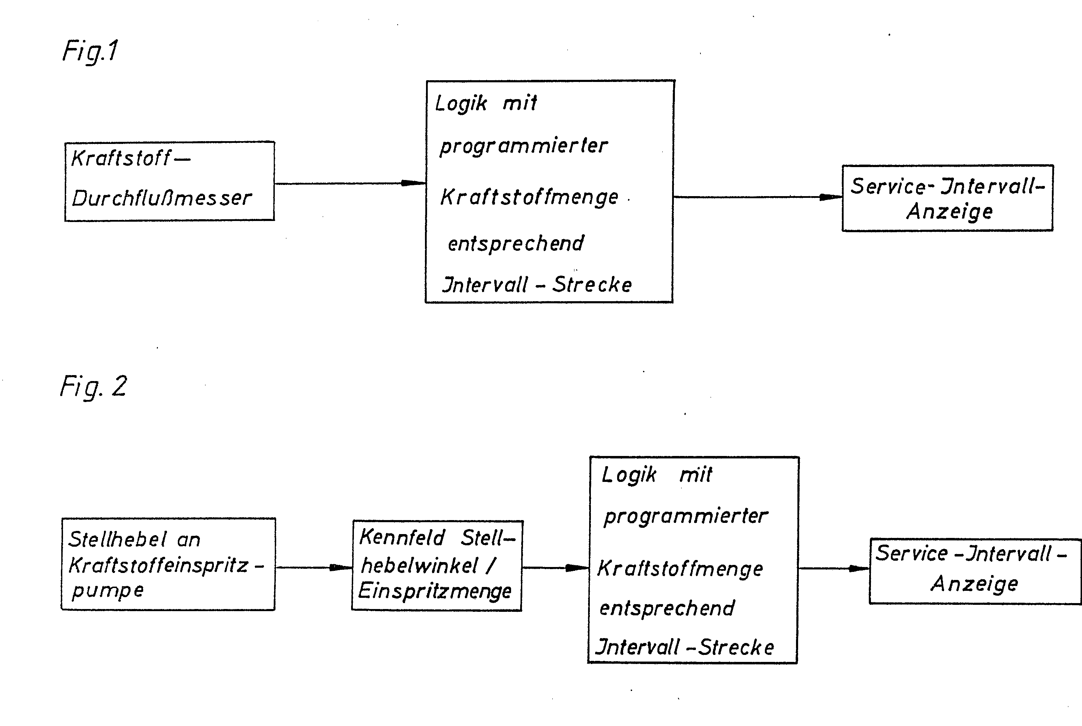

in Fig. 1 für Brennkraftmaschinen mit Vergaser oder Benzineinspritzung, und

in Fig. 2 für Diesel-Brennkraftmaschinen.

208/81

AUDI NSU AUTO UNION AKTIENGESELLSCHAFT, Neckarsulm/Württ.

Service-Intervall-Anzeigesystem
für Kraftfahrzeuge

<u>P a t e n t a n s p r ü c h e</u>

1. Service-Intervall-Anzeigesystem für Kraftfahrzeuge mit Antrieb durch eine Brennkraftmaschine, d a d u r c h g e k e n n z e i c h n e t , daß in Abhängigkeit von einem bestimmten Durchschnittsverbrauch für eine bestimmte Fahrstrecke eine Kraftstoffgesamtmenge festgelegt wird, daß die tatsächlich verbrauchte Kraftstoffmenge vom Beginn jedes Service-Intervalls an fortlaufend addiert wird und daß bei Erreichen der festgelegten Kraftstoffgesamtmenge ein Signal ausgelöst wird, das dem Benutzer anzeigt, daß der nächste Service fällig ist.

2. Service-Intervall-Anzeigesystem nach Anspruch 1, dadurch gekennzeichnet, daß in der zur Brennkraftmaschine führenden Kraftstoffleitung ein Durchflußmengenmesser angeordnet ist, der der durchströmenden Kraftstoffmenge entsprechende Impulse erzeugt, die addiert und mit der Anzahl der der festgelegten Kraftstoffverbrauchsmenge entsprechenden Impulse verglichen werden.

3. Service-Intervall-Anzeigesystem nach Anspruch 1, dadurch gekennzeichnet, daß in der zur Brennkraftmaschine führenden Kraftstoffleitung ein Durchflußmengenmesser angeordnet ist, der der durchgeströmten Kraftstoffmenge entsprechende Impulse erzeugt, die in einem subtrahierenden Impulszählwerk von der der durchschnittlichen Kraftstoffverbrauchsmenge entsprechenden Impulszahl abgezogen werden, und daß eine Alarmeinrichtung vorgesehen ist, die bei Erreichen von Null das Signal auslöst.

0064202

1/1

Fig.1

Kraftstoff—Durchflußmesser → Logik mit programmierter Kraftstoffmenge entsprechend Intervall-Strecke → Service-Intervall-Anzeige

Fig.2

Stellhebel an Kraftstoffeinspritz-pumpe → Kennfeld Stellhebelwinkel / Einspritzmenge → Logik mit programmierter Kraftstoffmenge entsprechend Intervall-Strecke → Service-Intervall-Anzeige

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-4 157 030  (KEELY) <br> * Insgesamt * <br><br> ----- | 1 | B 60 S  5/00 <br> B 60 Q  9/00 <br> G 07 C  3/00 |

|  |  | RECHERCHIERTE SACHGEBIETE (Int. Cl. ³) |
|---|---|---|
|  |  | B 60 S  5/00 <br> B 60 Q  9/00 <br> G 07 C  3/00 |

Der vorliegende Recherchenbericht wurde für alle Patentansprüche erstellt.

| Recherchenort <br> DEN HAAG | Abschlußdatum der Recherche <br> 29-07-1982 | Prüfer <br> ONILLON C.G.A. |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82